**Europäisches Patentamt**

**European Patent Office**

**Office européen des brevets**

(19)

(11) Numéro de publication: **0 119 119**
**A1**

(12) # DEMANDE DE BREVET EUROPEEN

(21) Numéro de dépôt: **84400292.3**

(22) Date de dépôt: **13.02.84**

(51) Int. Cl.³: **F 16 C 33/60**
**F 16 C 19/22**

(30) Priorité: **23.02.83 FR 8302929**

(43) Date de publication de la demande:
**19.09.84 Bulletin 84/38**

(84) Etats contractants désignés:
**CH DE GB IT LI**

(71) Demandeur: **NADELLA Société dite:**
**16 Avenue de la Republique**
**F-92503 Rueil Malmaison(FR)**

(72) Inventeur: **Stephan, Gérard**
**41 Avenue de Verdun**
**F-78290 Croissy(FR)**

(72) Inventeur: **Durivault, Jean**
**7 bis Rue Voltaire**
**F-18100 Vierzon(FR)**

(74) Mandataire: **Moncheny, Michel et al,**
**c/o Cabinet Lavoix 2 Place d'Estienne d'Orves**
**F-75441 Paris Cedex 09(FR)**

(54) **Bague de roulement à rouleaux ou à aiguilles et roulement en comportant l'application.**

(57) Bague de roulement à rouleaux ou à aiguilles dans la surface (11) de laquelle destinée à venir en contact avec les éléments de roulement est ménagée au moins une gorge périphérique (12), un jonc fendu (13) de maintien axial des éléments de roulement étant engagés dans la gorge, caractérisée en ce que ledit jonc a en coupe transversale une forme de trapèze rectangle dont le côté perpendiculaire aux bases constitue une surface de butée pour les éléments de roulement, la gorge dans laquelle est engagé le jonc ayant une forme complémentaire à celle dudit jonc.

FIG.2

EP 0 119 119 A1

Bague de roulement à rouleaux ou à aiguilles et
roulement en comportant application.-

_____

La présente invention concerne les roulements à rouleaux
ou à aiguilles, et se rapporte plus particulièrement aux
roulements radiaux.

Les roulements à aiguilles connus de ce type comprennent
généralement une bague extérieure dans laquelle est ménagée une
gorge périphérique interne destinée à constituer le chemin de
roulement de la bague et dont les bords latéraux sont destinés à
assurer le maintien latéral des éléments de roulement.

Cependant, la fabrication de bagues extérieures pourvues
d'une gorge interne nécessite des opérations d'usinage ou d'emboutissage qui sont relativement coûteuses.

Afin de réduire le prix de revient de ces bagues, on a
proposé de modifier leur fabrication en ménageant dans la surface
interne de la bague deux gorges annulaires et en montant dans
chaque gorge un jonc fendu destiné à maintenir latéralement les
éléments de roulement.

Cependant, une telle solution présente un grave inconvénient.

Des tolérances de fabrication sont nécessaires pour
l'éxécution des gorges et des joncs. Par conséquent, le jonc est
monté dans la gorge correspondante avec un certain jeu qui peut
entraîner un décalage entre les extrêmités en regard du jonc,
décalage pouvant provoquer l'accrochage des éléments de roulement
lorsqu'ils passent devant la zone de jonction des extrêmités du
jonc.

L'invention vise à remédier à cet inconvénient en créant
des bagues pour roulement à rouleaux ou à aiguilles qui allient un
faible prix de revient à un fonctionnement sans risque
d'accrochage des éléments de roulement.

Elle a donc pour objet une bague de roulement à rouleaux
ou à aiguilles dans la surface de laquelle destinée à venir en
contact avec les éléments de roulement est ménagée au moins une
gorge périphérique, un jonc fendu de maintien axial des éléments
de roulement étant engagés dans la gorge, caractérisée en ce que
ledit jonc a en coupe transversale une forme de trapèze rectangle

2

dont le côté perpendiculaire aux bases constitue une surface de butée pour les éléments de roulement, la gorge dans laquelle est engagé le jonc ayant une forme complémentaire à celle dudit jonc.

L'invention a également pour objet un roulement à aiguilles ou à rouleaux caractérisé en ce qu'il comporte au moins une bague du type défini ci-dessus.

D'autres caractéristiques et avantages de l'invention apparaitront au cours de la description qui va suivre, donnée uniquement à titre d'exemple et faite en référence aux dessins annexés, sur lesquels :

- la Fig.1 est une vue en élévation et en coupe d'un roulement à aiguilles à joncs rapportés qui présente les inconvénients indiqués plus haut;

- la Fig.2 est une vue analogue à la Fig.1 d'un roulement à aiguilles dont la bague extérieure est réalisée suivant l'invention;

- la Fig.3 est une vue en coupe partielle d'une variante de bague extérieure pour roulement à aiguilles suivant l'invention;

- la Fig.4 est une vue partielle en coupe d'une variante du roulement de la Fig.2; et

- la Fig.5 est une vue partielle en coupe d'un roulement à aiguilles dont la bague extérieure et la bague intérieure sont réalisées suivant l'invention.

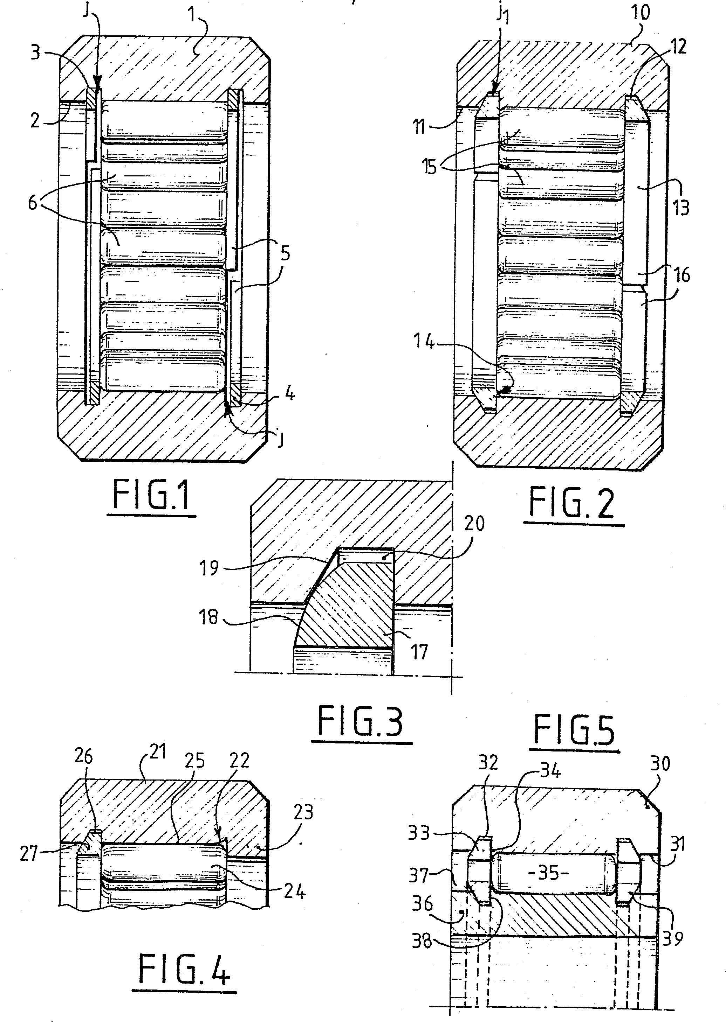

Sur la Fig.1, on a représenté un roulement à aiguilles dont la bague extérieure 1 est pourvue dans sa surface intérieure 2 de deux gorges annulaires 3 à bords verticaux, dans lesquelles sont engagés des joncs fendus 4 de section rectangulaire. Les gorges 3 et les joncs 4 sont réalisés avec les tolérances de fabrication, de sorte que, lors de la mise en place des joncs 4 dans leur gorge respective, des jeux j apparaissent entre les surfaces en regard des gorges et des joncs.

Il en résulte que les extrémités 5 en regard des joncs fendus 4 n'étant pas serrées par les parois verticales des gorges 3, elles ne sont pas alignées.

3

Ce décalage risque de provoquer, lors du fonctionnement du roulement, l'accrochage des éléments de roulement 6 lorsqu'ils passent devant la zone des extrémités 5 des joncs.

Afin de remédier à cet inconvénient, le roulement suivant l'invention représenté à la Fig.2, comporte une bague extérieure 10 dans la surface intérieure 11 de laquelle sont ménagées des gorges annulaires 12 de forme tronconique, la paroi intérieure de chaque gorge s'étendant dans un plan perpendiculaire à l'axe de la surface intérieure 11. Dans chacune des gorges 12 est engagé un jonc fendu 13 ayant, en coupe transversale, la forme d'un trapèze rectangle. La face latérale 14 de chaque jonc perpendiculaire aux surfaces extérieure et intérieure de celui-ci constitue la surface de butée axiale pour les éléments de roulement 15 qui dans le présent exemple sont des aiguilles. Les joncs 13 sont engagés dans les gorges 12 correspondantes de manière qu'un léger jeu j1 subsiste entre le fond de la gorge 12 et la surface extérieure du jonc 13. Les joncs sont donc en place dans leurs gorges respectives de telle manière que leurs extrémités 16 se trouvent exactement alignées l'une par rapport à l'autre, ce qui empêche tout décalage et évite par conséquent, l'accrochage des éléments de roulement 15.

En effet, la réaction provenant de la forme tronconique de l'une des parois de chaque gorge et de la forme correspondante du jonc oblige la face verticale 14 de celui-ci à venir au contact de la face correspondante de la gorge 12.

Le jeu j qui existait dans la solution représentée à la Fig.1, n'existe plus et la face 14 du jonc ne présente plus de décalage au niveau des extrémités 16 du jonc. Ainsi, les extrémités des aiguilles 15 sont en contact avec une zone de frottement continu constituée par les faces intérieures 14 des joncs 13.

La mise en place correcte des joncs est facile à contrôler. En effet, si le montage du jonc est inversé, le jonc ne peut pénétrer de façon suffisamment profonde dans la gorge destinée à le recevoir.

4

Par ailleurs, sa surface tronconique fait saillie vers l'intérieur de sorte que l'intervalle disponible entre les joncs pour placer les éléments de roulement diminue. La conicité de la face tronconique du jonc peut être définie de telle façon que le montage des éléments de roulement devienne impossible si les joncs sont inversés dans leurs gorges.

Sur la Fig.3, on a représenté une variante du roulement représenté à la Fig.2 selon laquelle les joncs 17 de maintien axial des éléments de roulement présentent une face extérieure 18 qui, tout en conservant une allure générale tronconique, est légèrement bombée. Cette face 18 coopère avec la face tronconique 19 correspondante de la gorge 20 dans laquelle est reçu le jonc 17.

Le roulement représenté à la Fig.4 comporte une bague extérieure 21 dont la surface intérieure 22 comporte à l'une de ses extrémités selon l'axe de la bague un épaulement 23 formant une première butée axiale pour les éléments de roulement 24, une piste de roulement 25 pour ces éléments et, à l'extrémité de la piste opposée à l'épaulement 23, une gorge 26 analogue aux gorges du roulement représentées à la Fig.2 et dans laquelle est engagé un jonc fendu 27 ayant en coupe transversale, une forme de trapèze rectangle, analogue aux joncs 13 du roulement de la Fig.2.

Le roulement à aiguilles représenté à la Fig.5 comporte une bague extérieure 30 dont la surface intérieure 31 comporte deux gorges tronconiques 32 dans lesquelles sont engagés des joncs 33 analogues aux joncs 13 du mode de réalisation de la Fig.2. Les faces intérieures 34 des joncs 33 constituent des surfaces de butée axiale pour les aiguilles 35 du roulement qui comporte en outre une bague intérieure 36 dont la surface extérieure 37 présente deux gorges tronconiques 38 dans lesquelles sont engagés des joncs fendus 39 ayant en coupe transversale une forme de trapèze rectangle, et dont les faces intérieures constituent des surfaces de butée axiale pour les aiguilles.

La fonction des joncs 39 portés par la bague intérieure 35 est la même que celle des joncs 33 portés par la bague extérieure. Leur mode de montage est également analogue.

5

Bien que dans le mode de réalisation représenté à la Fig.5, la bague intérieure soit pourvue, comme la bague extérieure de joncs rapportés, on peut également envisager de réaliser cette bague avec des épaulements venus de matière.

On peut également envisager de réaliser la bague extérieure et la bague intérieure avec un épaulement et de constituer la deuxième butée axiale de chacune des bagues par un jonc rapporté de la manière représentée à la Fig.4.

Dans les divers modes de réalisation qui viennent d'être décrits, l'invention est considérée comme étant appliquée à un roulement à éléments de roulement jointifs, les joncs fendus assurant le maintien axial des éléments de roulement par contact direct avec les extrémités des éléments de roulement.

Mais l'invention peut également être appliquée à des roulements comportant une cage de maintien des éléments de roulement. Dans un tel cas, les joncs assurent le maintien axial de la cage par contact avec les bords de celle-ci.

6

## REVENDICATIONS

1. Bague de roulement à rouleaux ou à aiguilles dans la surface (11;25;31;37) de laquelle destinée à venir en contact avec les éléments de roulement est ménagée au moins une gorge périphérique (12;20;26;32;38), un jonc fendu ( 13;17;27;33;39) de maintien axial des éléments de roulement étant engagés dans la gorge, caractérisée en ce que ledit jonc a en coupe transversale une forme de trapèze rectangle dont le côté perpendiculaire aux bases constitue une surface de butée pour les éléments de roulement, la gorge dans laquelle est engagé le jonc ayant une forme complémentaire à celle dudit jonc.

2. Bague de roulement suivant la revendication 1, caractérisée en ce que la surface du jonc (13) opposée à la surface de butée (14) pour les éléments de roulement présente en coupe transversale un profil rectiligne.

3. Bague de roulement suivant la revendication 1, caractérisée en ce que la surface du jonc (17) opposée à la surface de butée pour les éléments de roulement présente en coupe transversale un profil bombé (18) coopérant avec le profil rectiligne (19) de la paroi tronconique de la gorge (20) correspondante.

4. Bague de roulement suivant l'une quelconque des revendications 1 à 3, comportant une gorge annulaire (26) dans laquelle est engagé un jonc (27) de section transversale en forme de trapèze rectangle, caractérisée en ce que l'autre surface de butée axiale pour les éléments de roulement (24) est constituée par un épaulement (23) venu de matière avec la bague (21).

5. Bague de roulement suivant l'une quelconque des revendications 1 à 4, caractérisée en ce que les éléments de roulement étant montés dans une cage, lesdites surfaces de butée axiale pour les éléments de roulement assurent le maintien axial desdits éléments par contact avec les bords de ladite cage.

6. Bague de roulement suivant l'une quelconque des revendications 1 à 5, formant bague extérieure, caractérisée en ce que ledit au moins un jonc (13;17;27;33) ayant en coupe transver-

7

sale la forme d'un trapèze rectangle, est logé dans une gorge annulaire (12;20;26;32) ménagée dans la surface intérieure (11; 25;31) de ladite bague.

7. Bague de roulement suivant l'une quelconque des revendications 1 à 5, formant bague intérieure, caractérisée en ce que ledit au moins un jonc (39) ayant en coupe transversale la forme d'un trapèze rectangle est logé dans une gorge annulaire (38) ménagée dans la surface extérieure (37) de ladite bague.

8. Roulement à aiguilles ou à rouleaux, caractérisé en ce qu'il comprend au moins une bague de roulement suivant l'une quelconque des revendications 1 à 7.

FIG.1

FIG.2

FIG.3

FIG.5

FIG.4

0119119

1/1

**0119119**

Office européen
des brevets

**RAPPORT DE RECHERCHE EUROPEENNE**

Numéro de la demande

EP  84 40 0292

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | CH-A- 269 274  (ROULEMENTS A BILLES MINIATURES) <br> * Page  1, lignes 47-54; page 2, lignes 22-26; figures 1-3 * | 1,6-8 | F 16 C  33/60 <br> F 16 C  19/22 |
| | --- | | |
| A | FR-A-2 431 070  (SKF) | | |
| | --- | | |
| A | FR-A-2 407 388  (SKF) | | |
| | --- | | |
| A | FR-A-1 537 570  (SVENSKA) | | |
| | ----- | | |

DOMAINES TECHNIQUES
RECHERCHES (Int. Cl. ³)

F 16 C

Le présent rapport de recherche a été établi pour toutes les revendications

| Lieu de la recherche | Date d'achèvement de la recherche | Examinateur |
|---|---|---|
| LA HAYE | 25-05-1984 | BARON C. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

                
& : membre de la même famille, document correspondant

OEB Form 1503. 03.82